# EUROPEAN PATENT APPLICATION

(11) **EP 4 776 175 A1**
(43) Date of publication of application: **15.07.2026**
(21) Application number: 25227881.7
(22) Date of filing: 31.12.2025
(51) Int. Cl.: G06F 40/174, G06F 3/16, G06F 9/451

(54) **CONVERSATION-CONTROLLED EVOLVING USER INTERFACE**

(30) Priority: 09.01.2025 US 202519015548
(71) Applicant: Capital One Services, LLC, McLean, Virginia 22102 (US)
(72) Inventor: CURLEY, Kathryn, McLean, VA 22102 (US); PRASAD, Sachin, McLean, VA 22102 (US); SEAMAN, MaryJeanine, McLean, VA 22102 (US); VILASAGARAPU, Mohinder, McLean, VA 22102 (US); EMDEE, Erik, McLean, VA 22102 (US); PRESTON, Logan, McLean, VA 22102 (US); BOGART, Darren, McLean, VA 22102 (US)
(74) Representative: Boult Wade Tennant LLP

(57) **Abstract**

A method and related system for reducing computational cost when using a natural language model for adaptive forms includes transcribing an utterance produced into a text portion during a conversation associated with a first person. The method also includes determining a result indicating that an interval indicating when a field of the set of data entry fields was last updated satisfies a data entry interval threshold. The method also includes providing the text portion to a natural language model to predict a set of intents based on the result and presenting at least one element of the second set of UI elements on the UI screen based on the set of intents.

## Description

### SUMMARY

Conversational forms provide a dynamic manner of permitting users to enter information in forms that are specific to the user. A conversational form may combine natural language processing algorithms with adaptive user interfaces to create forms or other combinations of user interface elements that enable a user to focus on the most relevant fields when entering data. However, conversational forms may be restricted in cases of conversations between multiple parties due to the likelihood of the multiple parties engaging in purpose-irrelevant discussions. Such discussions may range from brief to extremely lengthy and may cause significant waste in the use of computing resources.

Some embodiments may overcome such problems by using utterance intervals or other data derived from real-time user interactions to control when to send requests to a natural language model. Such requests can prompt automatic redirection of user workflows on a user interface (UI). Some embodiments may transcribe an utterance produced by the first person into a text portion during a conversation between the first person and a second person. During the conversation, the second person may be acting as an agent user that is viewing a user-facing application's UI screen. The UI screen may present a first set of UI elements, where the agent user may enter data or otherwise interact with one or more data entry fields of the first set of UI elements. The user-facing application or another application may determine an interval indicating a rate at which the set of data entry fields is being populated, where the interval may be the time difference between a current time and a time when any field of the set of data entry fields is updated. Some embodiments may then determine whether the interval satisfies a data entry interval threshold and, if so, provide the text derived from an utterance to a natural language model to predict a set of intents. Some embodiments may then use the set of intents to predict future UI screens or other sets of UI elements to present to a user. Some embodiments may then use the user-facing application to present future UI screens or other sets of UI elements to the second user. By using user activity to determine whether to submit inputs to a natural language model, some embodiments may conserve the computing resources required for concurrent use of the natural language model. Conserving such resources may permit efficient deployment of operations to execute automatic redirection for hundreds, thousands, or even more concurrently executing applications.

Various other aspects, features, and advantages of the invention will be apparent through the detailed description of the invention and the drawings attached hereto. It is also to be understood that both the foregoing general description and the following detailed description are examples and are not restrictive of the scope of the invention.

### BRIEF DESCRIPTION OF THE DRAWINGS

FIG. 1 shows an illustrative diagram for evolving a UI using user-related activity and conversational data, in accordance with one or more embodiments.
FIG. 2 shows an illustrative diagram of an architecture for a UI that evolves based on using user-related activity and conversational data, in accordance with one or more embodiments.
FIG. 3 shows an illustrative diagram of example changes in a UI that depend on agent interactions.
FIG. 4 shows an illustrative diagram of example alternative changes in a UI.
FIG. 5 shows a flowchart of a process for updating a UI based on conversational and activity data, in accordance with one or more embodiments.
FIG. 6 shows a flowchart of a process for waiting until agent activity triggers operations to determine intents used to select a set of UI elements, in accordance with one or more embodiments.

The technologies described herein will become more apparent to those skilled in the art by studying the detailed description in conjunction with the drawings. Embodiments of implementations describing aspects of the invention are illustrated by way of example, and the same references can indicate similar elements. While the drawings depict various implementations for the purpose of illustration, those skilled in the art will recognize that alternative implementations can be employed without departing from the principles of the present technologies. Accordingly, while specific implementations are shown in the drawings, the technology is amenable to various modifications.

### DETAILED DESCRIPTION OF THE DRAWINGS

In the following description, for the purposes of explanation, numerous specific details are set forth in order to provide a thorough understanding of the embodiments of the invention. It will be appreciated, however, by those with skill in the art that the embodiments of the invention may be practiced without these specific details or with an equivalent arrangement. In other cases, well-known structures and devices are shown in block diagram form in order to avoid unnecessarily obscuring the embodiments of the invention.

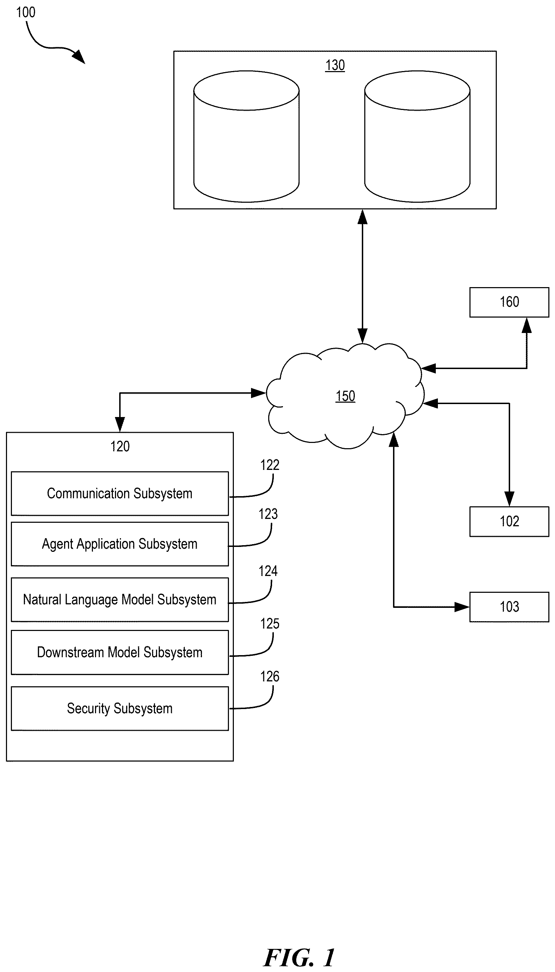

FIG. 1 shows an illustrative diagram for evolving a UI using user-related activity and conversational data, in accordance with one or more embodiments. A system 100 includes a client device 102 in communication with a server 120 via a network 150. As will be described further in this disclosure, the server 120 may perform operations to determine which decision model to use, synthesize new data from an erroneous sequence for learning model training, or modify the cadence of scheduled training operations.

The system 100 may provide real-time updates to a UI based on utterances made during a conversation. For example, the system 100 may present a first set of UI elements having a corresponding first set of data entry fields to an agent user via a user-facing application while the agent user is conversing with an external user. For example, the system 100 may present a first UI form having five data entry fields to an agent user while the agent user is conversing with an external user, providing the data necessary to fill the five data entry fields. The system 100 may then transcribe the utterances of the conversation into text and provide the text to a natural language model to obtain a set of intents and corresponding future set of UI elements. Some embodiments may then dynamically update the UI based on the future set of UI elements while the agent user is conversing with the external user, which permits the UI to dynamically evolve with the communicated needs of the agent user or the external user.

The system 100 may decrease the computing resource costs required to provide utterance-influenced, real-time updates to a UI by measuring intervals between user interactions with data entry fields of the UI or not taking actions on irrelevant utterances. After presenting a first set of UI elements to an agent user, the system 100 may transcribe an utterance of a conversation between the agent user and an external user into a natural language text portion. Before providing the natural language text portion to a natural language model, the system 100 may determine whether the agent user is interacting with the first set of UI elements in a manner that would make sending a request to the natural language model wasteful. For example, some embodiments may determine whether a time interval between interactions performed by the agent user to fill out or otherwise update a set of data entry fields associated with the first set of UI elements satisfies a data entry interval threshold. If the data entry interval threshold is exceeded by a period of agent user inaction, some embodiments may proceed to provide the natural language model with the time interval. Otherwise, the system 100 may proceed to delay sending a request to the natural language model, where the natural language model may then output a set of most likely intents that causes the system 100 to update the UI presented to the agent user based on a second set of UI elements. By preventing requests from being made to the natural language model during times when a user is filling out data entry fields, some embodiments can dramatically reduce unnecessary use of the natural language model. In real-world use cases, such user-facing applications can scale to dozens or even hundreds of concurrent users. Thus, operations to reduce the number of requests to a natural language model may amount to a significant reduction in the computing resource cost.

The system 100 may provide a conversation-controlled evolving UI by selecting or otherwise determining UI element sets based on predicted intents derived from conversational utterances. For example, the system 100 may transcribe an utterance to a text portion and determine a set of most likely intents based on the text portion during a conversation. The system 100 may then combine the set of most likely intents with other user-related data from other data channels, such as application clickstream data, transaction data, data stored in one or more accounts related to an external user, user-provided messages sent via a messaging platform, or user-related data from an account record. The system 100 may provide this combined data to a downstream prediction model to determine a set of identifiers for a second set of UI elements and then provide identifiers for the second set of UI elements to a user-facing application. The user-facing application may then present the second set of UI elements or UI elements related to the second set of UI elements. For example, the user-facing application may present, in a side window of a UI screen, a UI form name and a UI form descriptor characterizing a UI form defined by the second set of UI elements. By combining utterance-based data (e.g., the intent data) with other data related to an external user, some embodiments may produce a more accurate set of predictions on what UI forms or other set of UI elements would be most useful for an agent user when conversing with the external user. Furthermore, because such operations may be performed in real-time with a conversation between an agent user and an external user, updates to a UI screen can be more useful to the agent user in contrast to UI updates that occur before or after the conversation.

The client device 102 may include one of various types of computing devices, such as a laptop, a tablet, a desktop, etc. An agent user may use the client device 102 to send requests, responses, or other messages to the server 120 that may require communication with other computing devices or other electronic devices. An external user may use a telecommunication device 103 to communicate (e.g., via audio conversations, video conversations, messaging via a chat platform, etc.) with the agent user. Applications, services, or other operations may use data provided by the client device 102, the server 120, or a set of databases 130. The set of databases 130 may include various types of databases, such as SQL databases, no SQL databases, graph databases, etc. The server 120 may perform operations related to subsystems 122-126.

It should be noted that the computing devices described in this disclosure may be any type of computing device unless otherwise stated, including, but not limited to, a laptop computer, a tablet computer, a hand-held computer, and/or other computing equipment (e.g., a server), including "smart," wireless, wearable, and/or mobile devices. Furthermore, the embodiments described in this disclosure may include an individual device that performs some or all the operations described in this disclosure. Alternatively, other embodiments may include multiple computing devices acting collectively to perform some or all the operations described in this disclosure.

In some embodiments, a communication subsystem 122 may obtain audio data, text data, other communication channel data, or other user-related data from the client device 102, the telecommunication device 103, or a third-party data system 160 to perform a set of operations. For example, the server 120 may obtain audio data from a conversation between an agent user using the client device 102 and an external user using the telecommunication device 103. The communication subsystem 122 may further be used to collect data from multiple other channels, such as messages stored in the set of databases 130. For example, the communication subsystem 122 may receive both data from the client device 102 and the third-party data system 160 and aggregates the data into a combined set of inputs for a downstream prediction model.

In some embodiments, an agent application subsystem 123 may perform operations to collect and present UI data from a user. The agent application subsystem 123 may present a UI screen that includes multiple UI elements, where a UI element may include windows, text boxes, checkboxes, sliders, toggle switches, progress bars, cards, modal windows, navigation menus, search bars, buttons, radio dials, dropdown menus, sidebars, etc. As used in this disclosure, a data entry field may be a UI element in which a user may interact with to provide data. For example, a data entry field may include a text box into which a user may enter data, a dropdown menu used to select a category, a slider used to indicate a value, etc.

The agent application subsystem 123 may receive data for UI elements and display the UI elements. For example, the agent application subsystem 123 may receive identifiers for a first set of UI elements and, in response, display the first set of UI elements. Alternatively, or additionally, the agent application subsystem 123 may obtain program code indicating the parameters and contents of a UI element and construct the UI element based on the program code. Furthermore, the agent application subsystem 123 may receive instructions to prepare for an incoming caller. As described elsewhere in this disclosure, some embodiments may send a user-facing application a set of UI elements mapped to a user intent. In response, the agent application subsystem 123 may cause the user-facing application to present a set of UI elements mapped to the user intent.

In some embodiments, the agent application subsystem 123 may track when and what is being updated with respect to one or more UI elements. For example, the agent application subsystem 123 may store timestamps indicating the times at which a set of data entry fields are updated by a user. Some embodiments may determine, based on the corresponding timestamps, whether to send audio data or text data derived from the audio data to a natural language model. In some cases, the determination may be based on intervals between data entry field interactions, such as interactions to populate or otherwise update one or more data entry fields. For example, if the interval of inactivity since the time that a user last updated a data entry field of a UI screen is less than the duration threshold, some embodiments may prevent text data derived from conversations from being sent to a natural language model. As used in this disclosure, an interaction with a data entry field may include an entry of text into a field, manipulating a slider, selecting a category from a set of categories (e.g., via a dropdown menu or a radio dial), or other operations that update a state of the data entry field.

In some embodiments, the agent application subsystem 123 may detect that a set of values corresponding with a data entry field is present in a text portion derived from an utterance. For example, the agent application subsystem 123 may detect that a user uttered the word "key code 1523" and, in response, populate a data field titled "key code" with the value "1523." Furthermore, some embodiments may use an output of a local natural language model executed by the agent application subsystem 123 or an output of a remote natural language model that can be accessed by the agent application subsystem 123 to detect an uttered value corresponding with a data entry field and, in response, populate the data entry field.

In some embodiments, the natural language model subsystem 124 may use a natural language model to output predictions based on input text. For example, the natural language model subsystem 124 may provide a set of natural language text portions derived from utterances to a natural language model to output a set of category values representing intents ("set of intents"). In some embodiments, the natural language model subsystem 124 may further output the confidence values associated with the set of intents. For example, the natural language model subsystem 124 may provide a natural language model with the natural language text portion "I can't get the license to activate." In response, the natural language model may output a first intent with the value "reset license" with an associated first confidence value equal to "0.7" and a second intent with the value "stop license" with an associated first confidence value equal to "0.2." It should be understood that a confidence value may be normalized such that all confidence values are equal to 1.0 in some embodiments. Alternatively, some embodiments may normalize the confidence value to a different value, such that the sum of the confidence values of the outputs of a natural language model does not equal 1.0.

As used in this disclosure, the natural language model may include one or more various types of machine learning models, such as a statistical language model or a neural network language model, such as a transformer-based model. For example, the natural language model may include a transformer-based neural network model that applies a set of attention weights to a sequence of input text and is trained to predict one or more intents. Furthermore, some embodiments may use a natural language model by providing a message to an application program interface (API) for an application hosting the natural language model. For example, the natural language model subsystem 124 may include a language model application that hosts a natural language model. To use the natural language model, the natural language model subsystem 124 may provide a message that includes an utterance-derived text to an API of the natural language application.

In some embodiments, the downstream model subsystem 125 may use a downstream prediction model to determine a set of UI elements to present to a user. For example, the downstream model subsystem 125 may provide a downstream prediction model that may use the outputs of the natural language model (e.g., a set of intents) and data from data channels to select or otherwise determine a second set of UI elements. A downstream prediction model may include a prediction model that takes in, as a set of inputs, a set of outputs of the natural language model or user-related data from one or more other data channels. A prediction model may include various types of machine learning models and may include a model using the same type of architecture or even parameters as the natural language model. For example, a prediction model may include a statistical model, a neural network model, a random forest model, a naive bayes model, an ensemble model, or other types of machine learning models. Furthermore, some embodiments may combine a downstream prediction model with the natural language model described as being used by the natural language model subsystem 124. For example, the natural language model may be the downstream prediction model or may be a part of the downstream prediction model.

For example, the downstream model subsystem 125 may provide a downstream prediction model with an activity history associated with an account record of a user, such as an external user using the telecommunication device 103 to converse with an agent user using the client device 102. The activity history of an account record may include a set of activities such as messages sent via a messaging application from a user identified by the account record, transactions that affect one or more values for the account record stored in an account database, a security value, or special tags associated with the account record. In some embodiments, an activity history of a user may reference an activity history of an account record identifying the user or otherwise associated with the user. The activity history may also include clickstream data indicating other interactions with an application UI performed by the external user.

In some embodiments, the downstream model subsystem 125 may first determine a final set of intents that map to a corresponding set of UI elements. For example, the downstream model subsystem 125 may select a first final intent "account reset" and a second final intent "account deletion" based on a set of intents provided by the natural language model subsystem 124 and a messaging history with associated timestamps associated with an account for an external user. The downstream model subsystem 125 may then determine that the first final intent maps to a first UI element set titled "account reset form" and that the second final intent maps to a second UI element set titled "account deletion form." Alternatively, the downstream model subsystem 125 may use a downstream prediction model that is trained to directly select a set of UI elements based on the inputs to the downstream prediction model.

After selecting a set of UI elements, the downstream model subsystem 125 may then send the selected set of UI elements to a user-facing application of the agent application subsystem 123. For example, the downstream model subsystem 125 may provide program code for the selected set of UI elements or identifiers of the selected set of UI elements to the user-facing application. The user-facing application may then present the selected set of UI elements or data associated with the selected set of UI elements.

Furthermore, some embodiments may determine a future agent user for an external user to communicate with. For example, some embodiments may determine that, based on a final intent determined by the downstream model subsystem 125 for an external user, a new agent user should be contacted for communication with the external user. By using a downstream prediction model to combine data from different data channels, some embodiments may more accurately predict an external user's intents for downstream decision processes, such as redirecting a user to an appropriate agent user for live communication. Furthermore, such operations may result in significant time savings by eliminating the need for certain user interactions. For example, some embodiments may reduce the time spent by an agent user by 50 seconds or more by eliminating unnecessary clicks or providing a workflow path through a set of UI screens corresponding with one or more predicted intents.

In some embodiments, a security subsystem 126 may perform operations to verify whether a selected set of UI elements is appropriate for an external user or an agent user. Some embodiments may apply a rules engine that determines, based on a set of security scores associated with a user account, what UI elements are available for the user. For example, some embodiments may, during a conversation between an external user and an agent user, retrieve a first security score associated with the external user and a second score associated with the agent user. Some embodiments may then filter the set of available UI elements based on the lower score of the two scores, such that the downstream model subsystem 125 does not select any UI elements that have been filtered out based on the set of security scores. Alternatively, some embodiments may filter the set of available UI elements based solely on the agent user's security score or on the external user's security score. For example, a candidate UI form that includes a candidate set of UI elements may only be available to entities with a security score greater than "3." In response to a determination that an agent user has a security score equal to "3," some embodiments may prevent the downstream model subsystem 125 from recommending the candidate UI form (e.g., by sending identifiers of the candidate set of UI elements) to a user-facing application.

In some embodiments, an external user, e.g., a person, may have multiple accounts associated with a plurality of security scores. For example, an external user may control both a first account and a second account, where the two accounts are associated with different security scores defining a level of access for different UI forms. Some embodiments may determine both a first security score associated with the first account and a second security score associated with the second account. For example, a first account of a person may be assigned a security score of "1" and a second account of the person may be assigned a security score of "2," where the final score assigned to the person is the greatest security score (e.g., "2"). Some embodiments may compare the plurality of security scores with each other and select a final security score (e.g., a maximum security score of the plurality of security scores). Some embodiments may then compare the final security score to a security score threshold when determining what UI elements are available to present to the external user or to an agent user capable of being assigned to the external user.

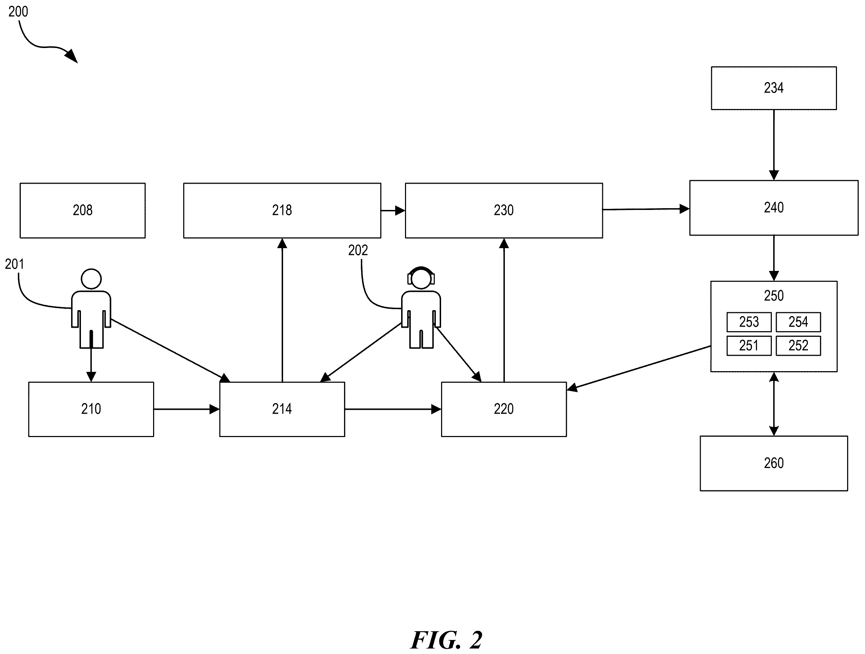

FIG. 2 shows an illustrative diagram of an architecture for a UI that evolves based on using user-related activity and conversational data, in accordance with one or more embodiments. The system 200 includes an interactive voice response application 210, which may receive audio data from a first person 201. The interactive voice response application 210 may provide the audio data from the first person 201 to a voice over IP (VoIP) application 214. The VoIP application 214 may also receive audio data from a second person 202, where the second person 202 may act as an agent that is conversing with the first person 201. The second person 202 may be using a computing device that is presenting a UI screen generated by an application executing on an agent application 220.

During the conversation between the first person 201 and the second person 202, the VoIP application 214 may send audio data to a transcription and routing service 218. For example, as the first person 201 speaks in a conversation with the second person 202, the transcription and routing service 218 may transcribe the words and sounds produced by the first person 201 in real-time. In some embodiments, the transcription and routing service 218 may transcribe separate text portions for each utterance produced by the first person 201, wherein utterance may be determined based on pauses in a conversation. For example, the first person 201 may say a series of sentences that are received by the interactive voice response application 210. The interactive voice response application 210 may then generate audio data storing the series of sentences and send the audio data to the VoIP application 214, where the VoIP application 214 may then provide the audio data to the transcription and routing service 218. The transcription and routing service 218 may then generate a series of text portions based on pauses in an audio segment, where each respective text portion of the series of text portions is a transcription of a phrase or other series of words separated by pauses in the audio segment. Alternatively, or additionally, the transcription and routing service 218 may send and transcribe the entirety of a speaker's turn without consideration for pauses.

Some embodiments may then determine whether to send one or more portions of the text portions to a natural language model 230. In some embodiments, the natural language model 230 may output predictions at a rate that is sufficient to qualify the natural language model 230 as a real-time natural language model or a near real-time natural language model. The natural language model 230 may output a predicted categories representing a set of most likely intents. For example, the natural language model 230 may output a first most likely intent "credit card activation" and a second most likely intent "credit card de-activation" based on a set of utterances produced by the first person 201. The natural language model 230 may output a set of intents based on a single text portion or a plurality of text portions provided by the transcription and routing service 218.

In some embodiments, the transcription and routing service 218 may selectively determine whether to send text portions representing utterances to the natural language model 230. For example, the transcription and routing service 218 may determine whether the second person 202 is entering data into one or more data entry fields presented by the agent application 220. If the second person 202 is entering data into a data entry field or has recently entered data into the data entry field within a data entry interval threshold, the transcription and routing service 218 may defer sending text data, audio data, or other data derived from utterances produced by the first person 201 or the second person 202 to the natural language model 230. By taking advantage of the actions of the second person 202 with respect to a UI presented by the agent application 220, some embodiments may significantly reduce the number of requests sent to the natural language model 230.

In some embodiments, the agent application 220 may include UI data that is being determined by different sub-applications executing in different containers. For example, a first sub-application of the agent application 220 may be executed by a first container used to execute a Vue.JS/Node.JS instance and a second sub-application of the agent application 220 may be executed by a second container.

The natural language model 230 may send a predicted set of most likely intents to a real-time downstream prediction model 240. Some embodiments may also provide channel data 234 to the real-time downstream prediction model 240. The channel data 234 may include data related to a user, such as a username, user account information, a feature value retrieved from an account record of the user, etc. In some embodiments, the channel data 234 may also include data of previous activity, where such activity may include a user's interaction with an online agent, a chatbot, other entities communicating via a messaging platform, a UI form, etc. Furthermore, in some embodiments, the real-time downstream prediction model 240 may provide outputs without requiring, as inputs, categories or other outputs from the natural language model 230. In some embodiments, the real-time downstream prediction model 240 may act as a rule mapper that ingests data from one or more data sources to predict a user intent in real-time with respect to interactions between users, where such predictions may occur in real-time with respect to the interacts. For the purposes of this discussion, a real-time response to an interaction may include a response that occurs within 5 seconds of the interaction.

The real-time downstream prediction model 240 may determine a final set of intents or other sets of categories that are mapped to or otherwise associated with UI elements, combinations of UI elements, or an entire UI screen. For example, the real-time downstream prediction model 240 may obtain a set of inputs that includes a set of intents from the natural language model 230 and user interactions with a chatbot provided by the channel data 234. The real-time downstream prediction model 240 may output a first category representing a first final intent having the name "renew application" and a second category representing a second final intent having the name "updated application." The real-time downstream prediction model 240 may then provide outputs to a UI selection service 250. Furthermore, in some embodiments, the real-time downstream prediction model 240 may generate predictions that causes a system to update a UI, such as updating a sidebar of the UI screen. In some embodiments, the updated UI may provide a user, such as an agent user, the option to to click and jump to a workflow screen mapped to or otherwise associated with a predicted intent.

In some embodiments, the real-time downstream prediction model 240 may predict a plurality of intents based on input conversational data or other input data. In some embodiments, the real-time downstream prediction model 240 may determine set order of intents and generate a custom workflow based on the set order of intents. For example, the real-time downstream prediction model 240 may predict a first intent "intent1" that is then followed by a second intent "intent2." The first intent "intent1" may be mapped to UI screens "screen1" and "screen2," and the second intent "intent2" may be mapped to the UI screen "screen A." Based on this order, some embodiments may generate a custom UI screen sequence constructed from a workflow of UI screens in the order of "screen1," "screen2," and "screen A." In some embodiments, a link to the start of this custom sequence is presented on a UI screen element (e.g., a sidebar) for a user (e.g., an agent user) may click on the link to access the start of this custom sequence (i.e., UI screen "screen1"). In some embodiments, real-time downstream prediction model 240 may then publish outputs data as streaming data to a streaming platform that can then be accessed by the UI selection service 250 (e.g., by providing the data to a container-operated data transformation application 254).

The UI selection service 250 may act as a redirection prediction service that includes a private API 251 to determine predicted intents and orchestrate fetching operations based on those predicted intents. For example, the private API 251 may be operated by a NodeJS container to perform orchestration operations. The UI selection service 250 may also include a rules engine 252 operating on a second container. The rules engine 252 may house logic to fetching a user-related data (e.g., customer user-related data, agent user-related data, etc.) or feature level eligibility information for an application UI data or other data needed for a predicted intent. The UI selection service 250 may further include or otherwise have access to a data store 253 to store predicted intent data, where the data store 253 may be a low latency data store (e.g., a DynamDB data store). The use of a low latency data store may permit the UI selection service 250 to provide data at a sufficient speed as to enable real-time responses based on audio communication taking place between two or more people. The UI selection service 250 may further include the container-operated data transformation application 254 to transform streamed predictions (e.g., predicted intents) from one or more data sources or machine learning models, such as the real-time downstream prediction model 240 to be compatible with other components of the UI selection service 250 (e.g., the private API 251, the rules engine 252, the data store 253, etc.).

During operations, the private API 251 may fetch eligibility data from the rules engine 252. The rules engine 252 may retrieve input data to determine eligibility from the container-operated data transformation application 254. The private API 251 may also query data from the data store 253. In some embodiments, the container-operated data transformation application 254 may populate the data store 253 with one or more transformed intent predicted by one or more data sources or one or more machine learning models (e.g., the real-time downstream prediction model 240). In some embodiments, some or all of the components of the UI selection service 250 may send messages to each other in the form of JSON data or one or more HTTP messages. In some embodiments, the UI selection service 250 may publish output predictions or decisions to a streaming platform, where the streaming platform may then update a UI element of a UI screen of the agent application 220, where updates to the UI screen may be provided in the form of Transmission Control Protocol (TCP) data. Updating the agent application 220 via TCP may be preferable to other communication methods (e.g., HTTP messages) due to the speed advantages of TCP with respect to providing real-time responses to user conversations, user interactions, etc.

In some embodiments, the UI selection service 250 may select one or more sets of UI elements associated with the set of intents or other categories provided by the real-time downstream prediction model 240. For example, the UI selection service 250 may select a first set of UI elements associated with a first intent "renew application" and select a second set of UI elements associated with a second intent "updated application." The UI selection service 250 may then send identifiers of the selected set of UI elements sets to the agent application 220. The agent application 220 may then present the selected set of UI elements in response to being provided with the identifiers of the selected set of UI elements or may present names, text, shortcuts, or other data associated with the selected set of UI elements. Additionally, while shown as separate models, alternative embodiments may use a single machine learning model to combine the natural language model 230, the real-time downstream prediction model 240, or the UI selection service 250. For example, alternative embodiments may provide text derived from utterances to a machine learning model that outputs a recommended set of UI elements.

In some embodiments, user-related data, such as user-related data provided in the channel data 234, may be used by a security verification service 260 to verify if a record of the first person 201 has sufficient security to access one or more UI elements. In response to a determination that the first person 201 does not have sufficient security to access a set of UI elements, some embodiments may prevent the UI selection service 250 from selecting the set of UI elements.

Some embodiments may be configured in a distributed architecture such that one or more operations described in this disclosure may be performed by separate services or separate applications. For example, the agent application 220 may be hosted on the first container of a distributed computing system. The natural language model 230 may be hosted on a second container of the distributed computing system, such that containers hosting versions of the agent application 220 may be scaled up or down independently of the containers hosting versions of the natural language model 230. Alternatively, or additionally, other services or applications shown in the system 200 may be hosted by different containers. For example, the real-time downstream prediction model 240 may be hosted on a third container, the UI selection service 250 may be hosted on a fourth container, and the security verification service 260 may be hosted on a fifth container. Alternatively, some embodiments may host multiple applications or services on the same container. For example, some embodiments may host a version of the UI selection service 250 and a version of the security verification service 260 on a shared container. Furthermore, the distinct items described for the system 200 are provided for exemplary purposes only and may be combined or further separated in other embodiments. For example, in some embodiments, the interactive voice response application 210 may be combined with the VoIP application 214 or the agent application 220.

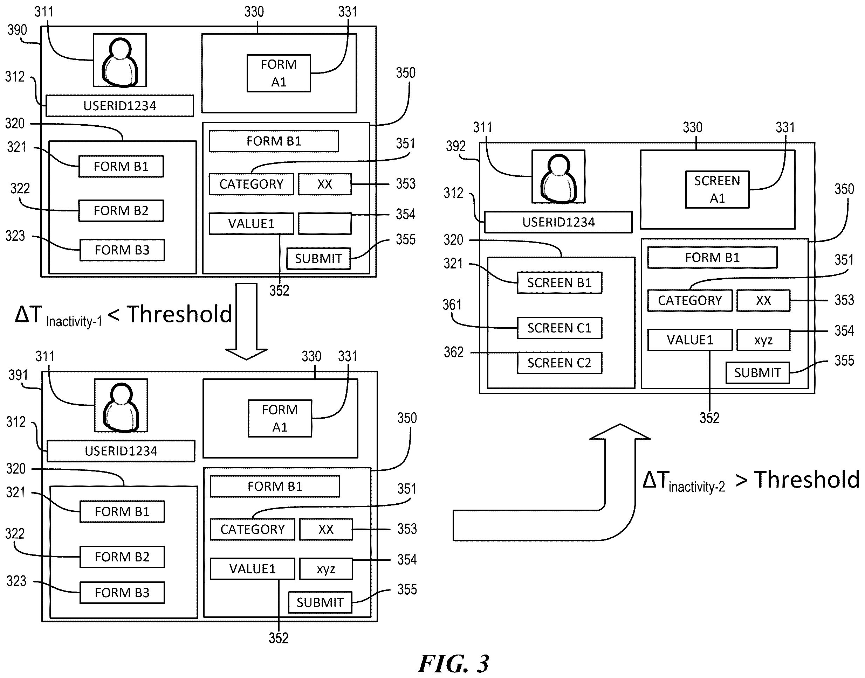

FIG. 3 shows an illustrative diagram of example changes in a UI that depend on agent interactions. A first UI screen 390 includes multiple UI elements derived from a profile record for a user, such as a profile image 311 and a profile identifier 312. The first UI screen 390 also includes, as another UI element, a sidebar 320, where the sidebar 320 includes a first sidebar UI element 321, a second sidebar UI element 322, and a third sidebar UI element 323. The three UI elements 321-323 may indicate recommendations for other UI element sets and may cause a viewing element 350 to present different UI elements. For example, an interaction with an element of the three UI elements 321-323 (e.g., a click on the first sidebar UI element 321) may cause a viewing element 350 to present different UI elements mapped to or otherwise associated with the interacted-with sidebar element.

Some embodiments may obtain user-related data and provide the user-related data to a downstream prediction model. The downstream prediction model may select a first set of UI elements represented by the identifier "FORM A1" based on the user-related data. Some embodiments may then provide the identifier to an agent application to cause the agent application to present, in a header 330, a header element 331. If a user interacts with the header element 331, the viewing element 350 may then be updated to present the first set of UI elements.

Some embodiments may provide transcribed text derived from a conversation to a natural language model to determine a set of categories representing intents. Some embodiments may then determine a plurality of UI element sets based on the set of intents and provide identifiers of the plurality of UI element sets to the first UI screen 390. For example, the identifiers may be "B1," "B2," and "B3." Some embodiments may then present the first sidebar UI element 321, the second sidebar UI element 322, and the third sidebar UI element 323. In response to a user interaction with the second sidebar UI element 322, the viewing element 350 may present the set of UI elements mapped to the identifier "B2," where the set of UI elements includes a first item title element 351, a second item title element 352, a first data entry field element 353, a second data entry field element 354, and a data submission element 355. In some embodiments, a user (e.g., an agent) may populate the first data entry field element 353 at a first time.

Some embodiments may use a data entry interval threshold to defer sending data to a natural language model. For example, as a user is populating data fields into the data entry fields 353-354, some embodiments may defer sending text data derived from conversations to a natural language model. After a first period of time during which a user populates the second data entry field element 354, the first UI screen 390 may be updated to show a second UI screen 391 at a second time. At the second time, a period of data entry inactivity (ΔT_{inactivity-1}) during which a user does not update the first data entry field element 353 and the second data entry field element 354 is less than the data entry interval threshold. In some embodiments, a data entry interval threshold is equal to 30 seconds, and the duration between the first time and the second time may be less than the data entry interval threshold. In some embodiments, the data entry interval threshold may be equal to a different value, such as a value less than or equal to 10 seconds, a value less than or equal to 60 seconds, a value less than or equal to 5 minutes, etc. Some embodiments may instead provide text data to a natural language processor but suppress updating the sidebar 320 with additional predicted UI element sets based on a determination that a confidence associated with the predicted UI element set is less than a confidence threshold.

A third UI screen 392 is an updated version of the second UI screen 391, where a second period of data entry inactivity (ΔT_{inactivity-2}) has occurred after the second time for a duration greater than the data entry interval threshold. In response to a determination that the duration of data entry inactivity is greater than the data entry interval threshold, some embodiments may send text data derived from user utterances to a natural language model. Some embodiments may then obtain a set of intents from the natural language model, obtain a set of UI element identifiers for element identifier sets "FORM C1" and "FORM C2" based on the set of intents, and update the sidebar 320 based on the set of UI element identifiers. Furthermore, it should be understood that other embodiments may perform one or more operations described above while varying what UI elements are updated. For example, instead of updating a sidebar (e.g., the sidebar 320), some embodiments may update a main screen based on an utterance or data derived from an utterance.

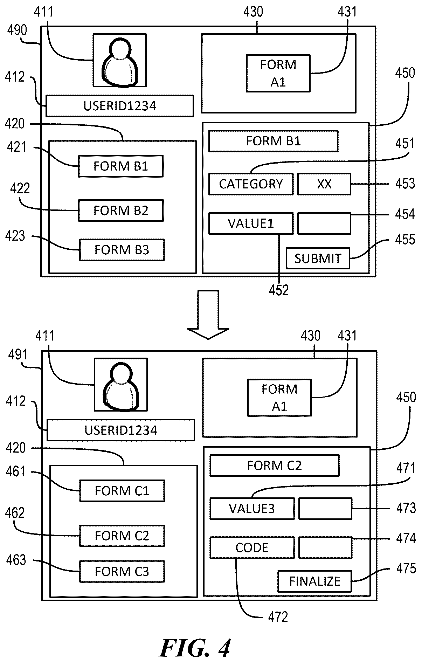

FIG. 4 shows an illustrative diagram of example alternative changes in a UI. A first UI screen 490 includes multiple UI elements derived from a profile record for a user, such as a profile image 411 and a profile identifier 412. The first UI screen 490 also includes, as another UI element, a sidebar 420, where the sidebar 420 includes a first sidebar UI element 421, a second sidebar UI element 422, and a third sidebar UI element 423. The three UI elements 421-423 may indicate recommendations for other UI element sets. The first UI screen 490 also includes a viewing element 450 with five interactive UI elements 451-455 and a sidebar element 420 that includes interactive UI elements 421-423.

Some embodiments may provide transcribed text derived from a conversation to a natural language model to determine a set of categories representing intents. Some embodiments may then determine a plurality of UI element sets based on the set of intents and provide identifiers of the plurality of UI element sets to the first UI screen 490. For example, the identifiers may be "C1," "C2," and "C3." Some embodiments may then present a fourth sidebar UI element 461, a fifth sidebar UI element 462, and a sixth sidebar UI element 463. Furthermore, in response to a determination that a confidence value corresponding with "C1" is greatest, an application may update the viewing element 450 to display the set of UI elements associated with "C1." For example, the viewing element 450 includes a third item title element 471, a fourth item title element 472, a third data entry field element 473, a fourth data entry field element 474, and a second data submission element 475. Furthermore, while not shown, some embodiments may populate the third data entry field element 473 or the fourth data entry field element 474 based on audio data from a user. For example, an application may provide text derived from audio data to a natural language model and receive a numeric value from the natural language model, where the application may then populate the third data entry field element 473 with the numeric value.

In some embodiments, the sidebar 420 or another sidebar described in this embodiments may provide personalized context information. For example, the first sidebar UI element 421 may display additional text explaining why the first sidebar UI element 421 was provided. The sidebar 420 may also present links to articles or other UI screens that can help a predicted informational need indicated by an intent. Alternatively, or additionally, the sidebar 420 may provide a dynamic completed actions sections that indicates previous, unsuccessful attempts to fill a form or satisfy a predicted intent. By presenting information indicating one or more previous unsuccessful attempts, some embodiments may provide a way for a user to efficiently revisit a UI screen mapped to the attempt and successfully fill or form or otherwise satisfy a predicted intent.

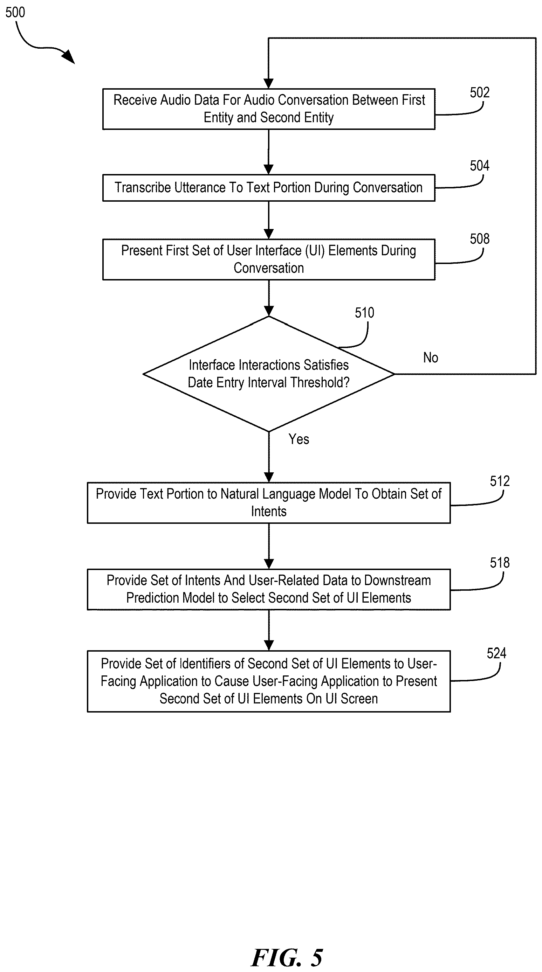

FIG. 5 shows a flowchart of a process for updating a UI based on conversational and activity data, in accordance with one or more embodiments. Some embodiments may receive audio data for an audio conversation between at least a first entity and a second entity, as indicated by block 502. The conversation between a first entity and a second entity may be obtained as a series of utterances from the first entity and the second entity. Some embodiments may automatically segment the audio conversation based on utterances, where utterance may be defined by pauses in an audio segment that includes the speaker's speech. In some embodiments, an utterance begins at a starting time, indicating when a starting sound is detected after a previous pause. An utterance ends at an ending time, indicating the beginning of a new pause. An utterance-defining pause may include a predetermined pause duration. For example, after a starting time for an utterance, an audio segment includes a series of sounds that occur such that none of the pauses between the sounds do not exceed a pre-determined pause duration. Some embodiments may treat the series of sounds as part of a single utterance. Alternatively, some embodiments may dynamically determine a pause duration for a speaker based on the rate at which the speaker speaks. Furthermore, some embodiments may automatically segment an audio file into turns of the first or second entities. For example, a turn for a first entity may be defined as the portion of that conversation spoken by the first entity without being interrupted by the second entity.

Some embodiments may transcribe an utterance to a text portion during the conversation, as indicated by block 504. When transcribing an utterance, some embodiments may use a third-party service to transcribe audio data. For example, an application executing on a container may transmit audio data to an API of a third-party transcription service hosted in a different computing device and obtain text data for the transcription in response. Alternatively, or additionally, an application may use a native application or service executing on a same device hosting the application to transcribe a service. For example, an application container may host an application that includes a natural language translation module to convert audio data into text.

Some embodiments may present a first set of UI elements during the conversation, as indicated by block 508. Some embodiments may present a set of UI elements based on default settings, such as a user homepage, a system-wide landing page, etc. Some embodiments may determine an initial screen based on previous interactivity, where the previous user activity may include a previous activity of an agent user using the user interface, the previous activity of a different entity, etc. For example, some embodiments may determine a first set of UI elements by selecting the first set of joy elements based on a user activity history. For example, if a user calls into a computer system, the computer system may retrieve previous messages sent by that user and previous transactions effectuated by that user as part of the activity history of that user and provide the activity history to a downstream prediction model for the purpose of determining a set of UI elements.

Some embodiments may prepare a user's UI screen based on past conversations with other users. For example, before having a current conversation with an agent user, a client user with an account record may have had a previous conversation with a previous agent user or an interactive voice response system. Some embodiments may transcribe a previous utterance produced by the client user into a previous text portion during that previous conversation. Furthermore, during or after that previous conversation, some embodiments may provide the previous text portion to a natural language model to determine a previous set of most likely intents based on the previous utterance. For example, a client user may have conversed with a first agent user before conversing with a second agent user. Some embodiments may determine a set of previous intents and intent category labeled as "reset application connection" based on one or more previous utterances with the first agent user. Some embodiments may then use the intent category "reset application connection" as an input for a downstream prediction model to select an initial set of UI elements to be presented to the second agent user by a user-facing application. In some embodiments, the second agent user may initialize the user-facing application and be presented with the initial set of UI elements before beginning to communicate with the client user.

Some embodiments may determine whether one or more interface interactions with the UI satisfy a data entry interval threshold, as indicated by block 510. Some embodiments may calculate an interval indicating a duration starting from a timestamp indicating when a field of the set of data entry fields was last updated and ending at a current time. For example, if a set of data entry fields includes three fields and a user has not updated any of the three fields for 29 seconds, some embodiments may determine that the interval since the last data entry update is equal to 29 seconds.

Some embodiments may obtain the data entry interval threshold as a default value. For example, some embodiments may be configured to use a configuration file that sets the data entry interval threshold to 30 seconds. In some embodiments, the data entry interval threshold may be selected based on a set of UI elements, such that different sets of UI elements may correspond with different data entry interval thresholds. Some embodiments may determine that the threshold is satisfied (and thus triggering sending data to a natural language model) an interval during which a data entry element is not updated is greater than a data entry interval threshold. It should also be understood that other modifications to the time can be made. For example, some embodiments may use a mean average interval or other measure of central tendency for an interval (e.g., median interval) for comparison with a data entry interval threshold.

Some embodiments may filter extraneous information to prevent such extraneous information from modifying a UI screen. While a significant portion of a conversation between two or more entities may be relevant to a set of available intents, other portions of the conversation may be completely irrelevant with respect to the set of available intents. The relevance of an utterance to a set of available intents may be determined based on values associated with intents derived from the utterance. Some embodiments may determine that a set of confidence values does not satisfy a confidence threshold. For example, some embodiments may determine that a set of confidence values does not satisfy a confidence threshold if none of the confidence values of those confidence values exceed the confidence threshold. Alternatively, a sum of the confidence values of those confidence values does not exceed the threshold, etc. Some embodiments may prevent a corresponding set of intents from affecting a UI.

For example, some embodiments may transcribe an earlier utterance into an earlier text portion and a later utterance into a later text portion. Some embodiments may then provide the earlier text portion to a natural language model to obtain an earlier set of most likely intents related to the earlier text portion and provide the later text portion to the natural language model to obtain a later set of most likely intents related to the later text portion. The natural language model may output confidence values associated with an output set of intents. For example, the earlier set of intents may be provided with an associated earlier set of confidence values, and the later set of intents may be provided with an associated later set of confidence values. In response to a determination that a sum of the later set of confidence values is less than a confidence threshold (e.g., a confidence threshold greater than or equal to 0.5, a confidence threshold greater than or equal to 0.75, or a confidence threshold greater than or equal to another value), some embodiments may forgo sending the earlier set of most likely intents to a downstream prediction model used to recommend or otherwise select UI elements. Instead, some embodiments may use an earlier activity history by providing the earlier activity history to a downstream prediction model to determine an earlier set of UI elements. Moreover, in response to a determination that a sum of the later set of confidence values is greater than the confidence threshold, some embodiments may provide the later set of intents to the downstream prediction model.

By preventing model outputs associated with insufficiently great confidence values from affecting a UI screen, some embodiments may ensure that deviations from a selected conversation topic associated with a set of available intents do not affect changes to an application UI. For example, some embodiments may detect that a conversation has deviated from a discussion about network infrastructure to a conversation about an irrelevant topic, such as dog food. Such a determination may be based on the confidence values associated with model outputs representing intents for conversation participant utterances.

Some embodiments may store utterances in a cache or data derived from utterances in a cache to increase response times, where a cache may be a high-speed storage layer. Caches may include L1 cache memory, L2 cache memory, L3 cache memory, L4 cache memory, data caches, disk caches, etc. Furthermore, some embodiments may conserve computing resource costs, such as memory or processor resources, by discarding utterances in a cache or discarding data derived from utterances in the cache. For example, some embodiments may determine that a form is being filled out based on a determination that one or more data entry fields of the UI screen are to be populated. Some embodiments may then ignore utterances and discard the utterances that are produced during this period. For example, an agent user may enter information into a set of data entry fields in a set of UI elements. The agent user may be entering data for a period of three minutes. It should be understood that entering data into a set of data entry fields for continuous entry may instead be defined by a data entry interval threshold, such as an interval threshold equal to five seconds or less, 10 seconds or less, 30 seconds or less, one minute or less, etc. Some embodiments may discard utterances during this three-minute interval. After the agent user has stopped entering data into the set of data entry fields, some embodiments may then proceed to provide text portions generated from utterances to a natural language model to produce a set of most likely intents. As described elsewhere in this disclosure, some embodiments may use this set of most likely intents to update one or more elements displayed on the UI screen of the client user.

Some embodiments may provide the text portion to a natural language model to obtain a set of intents, as indicated by block 512. Some embodiments may provide a single text portion corresponding to a single utterance in the natural language model to obtain the set of intents. Alternatively, or additionally, some embodiments may provide a plurality of text portions corresponding to a plurality of utterances to the natural language model to obtain a set of intents. For example, some embodiments may provide, to a machine learning model, a plurality of text portions that include a first text portion "I want to open an account" and a second text portion that includes the second text portion "and I want to cancel my old account." In response, the natural language model may output the intent category "account transfer."

Some embodiments may store text data, intent categories, or other data in a low-latency database. The use of the low-latency database may increase the speed at which data may be retrieved, where such speed increases may be critical to providing real-time responses. For example, some embodiments may provide utterances or text portions generated from the utterances into a low-latency database. A low-latency database may include a database that has a fast response time, such as a response time less than 100 milliseconds (ms), a response time less than 50 ms, a response from less than 25 ms, or even a response time less than 10 ms.

For example, a computer system may determine a timestamp associated with a text portion derived from an utterance. The computer system may then provide the timestamp and the text portion to a natural language model to determine a set of most likely intents. The computing system may store the set of most likely intents in a low-latency database in association with the timestamp. Some embodiments may determine whether the timestamp exceeds a low-latency database duration threshold and, based on a determination that the timestamp does exceed the duration threshold, the set of most likely intents from the low-latency database.

Some embodiments may provide the set of intents and user-related data to a downstream prediction model to select a second that set of UI elements, as indicated by block 518. Some embodiments may retrieve user-related data, such as clickstream data, demographic data, security data, or message data, from a user-related database. For example, some embodiments may retrieve a message stored in a user's account record indicating the past 300 messages sent from or to the user. Alternatively, or additionally, some embodiments may retrieve user-related data from a third-party data source, such as a third-party data source providing demographic information about the user.

Some embodiments may use other communications from a user to determine a set of outputs using the downstream prediction model. Furthermore, some embodiments may incorporate timestamps associated with those communications or other time-related data to modify a set of weights associated with the other communications. For example, some embodiments may obtain a set of text messages provided by a user and an associated set of timestamps for the set of text messages via a messaging platform. Some embodiments may then filter a set of text messages based on messages received within a time threshold, where the time threshold may be less than or equal to five minutes, less than 10 minutes, less than or equal to 30 minutes, lesser than or equal to one hour, less than or equal to two hours, less than or equal to six hours, less than or equal to 12 hours, less than or equal to one day, less than or equal to one week, less than or equal to one month, less than or equal to one year, etc.

In some embodiments, a set of intents may be related together with a shared category. For example, a first intent "cancel account" and a second intent "cancel all accounts" may each be grouped together in the intent grouping "account cancellation," and a third intent "change address" and a fourth intent "change name" may each be grouped together in the second intent grouping "user information change." Some embodiments may treat certain groupings of intents as being contradictory and restrict simultaneous recommendations for the sets of intents associated with the intent groups. Such operations may help both to reduce user confusion and to reduce the time needed to produce outputs, where such benefits may be especially helpful when performing real-time operations to select UI elements for presentation during a conversation.

Some embodiments may compare a set of confidence values with each other or a confidence threshold and select only candidate intents having confidence values that exceed the confidence threshold. For example, some embodiments may determine a first set of candidate intents having a first confidence value equal to "0.6" based on a sum of confidence values associated with each individual candidate intent of the first set of candidate events. Similarly, some embodiments may determine a second set of candidate intents having a second confidence value equal to "0.35" based on a sum of confidence values associated with each individual candidate intent of the second set of candidate events. Some embodiments may then compare both the first and second confidence values to a confidence threshold equal to "0.4" to determine that the first confidence value is greater than the confidence threshold and that the second confidence value is less than the confidence threshold. In response, some embodiments may select the first set of candidate intents as an input set of most likely intents for a downstream prediction model without selecting the second set of candidate intents for the downstream prediction model.

Alternatively, or additionally, some embodiments may determine prediction model weights to associate with the messages based on the difference in time between the timestamps associated with those messages and a current time. For example, some embodiments may determine a set of time differences representing the difference between a set of timestamps for a set of messages and a current time. Some embodiments may then determine a set of input weights associated with the set of messages using an algorithm, function, or other relationship that indicates a negative correlation between the time difference and the input weight (e.g., an inverse proportionality correlation, a linear negative correlation, an exponential decay correlation, a logarithmic relationship having a negative constant, a power law correlation with a negative exponent, a custom stepwise function, etc.). For example, if a first time difference for a first message is five minutes and a second time difference for a second message is one hour, an input weight for the first message may be greater than an input weight for the second message. A greater input weight associated with an input may mean that the input has a greater influence on the model with respect to the output. For example, an input value may significantly change the output of a model that uses that input value. In contrast, a low or even trivial input weight provided in association with the input value may cause a model to ignore the input value.

Some embodiments may select or otherwise determine a sequence of UI element sets or even entire sequences of UI screens based on utterances produced during a conversation. To determine the sequence of UI elements, a computer system may use a downstream prediction model to first determine the initial UI element set to present to an agent user based on a first set of most likely intents derived from utterances produced by a client user. Alternatively, or additionally, some embodiments may determine the initial UI element set based on a second set of intent category values or other predictions derived from a user's past interactions with a person or chat bot on a messaging platform or based on other user-related data. Some embodiments may determine a following UI element set based on the same set of first set of most likely intents or second set of intent category values, where user interactions with one or more UI elements of the initial UI element set may cause an update to a UI screen to present the following UI element set. For example, a user-facing application may receive identifiers of both the first and second UI element sets. The user-facing application may then present to a user the first UI element set. The user-facing application may receive from the user and interact with a "submit" button of the first UI element set, indicating that a set of data entry fields for the first UI element set is populated and, in response, presents the second UI element set. Furthermore, while a user-facing application may be presented to an agent user in some embodiments, other embodiments may update a user-facing application that is provided to a non-agent use. For example, some embodiments may update an application UI being presented to a customer user that is in conversation with an agent user or a chatbot.

By using input weights derived from time-related data in association with input values, some embodiments may increase the likelihood that only recent interactions with a user will affect recommendations or predictions for a second UI elements. For example, some embodiments may obtain a first set of messages from a messaging platform that are indicated to be associated with the topic "infrastructure" and obtain a second set of messages from the messaging platform that are indicated to be associated with the topic "transactions." Some embodiments may use operations described in this disclosure to filter out or reduce input weights associated with the first set of messages when being provided to a downstream prediction model, where such a change to the weights may cause the downstream prediction model to ignore the first set of messages. In contrast, some embodiments may determine that the weight associated with the second message is significantly greater than the weight associated with the first set of messages based on the determination that the second set of messages was received only five minutes before the second set of messages was provided as an input(s) for the downstream prediction model.

Alternatively, or additionally, some computer systems may use time differences to entirely filter out messages or other activities in a user activity history. For example, some computer systems may determine that a set of time differences derived from timestamps of a set of messages or other user activities of a set of activities (e.g., interaction with a user interface, user-effectuated database transactions, etc.) were all greater than a time threshold. Based on the detected set of time values, some computer systems may then prevent any corresponding message or other activities of the set of activities from being provided to a downstream prediction model used to select future UI element sets. In contrast, the computer system may select a time difference based on the subset of activities that occur after the time indicated by a time threshold.

Some embodiments may determine a sequence of UI element sets in real-time with respect to a conversation. For example, during a conversation between a first and second entity, some embodiments may produce a conversation. By dynamically determining a sequence of UI element sets that can be presented at different times, some embodiments may permit dynamic evolutions in a user interface for sequences of user interface screens, such that different conversations may produce different sequences. For example, some embodiments may select a second UI element set to follow a first UI element set in lieu of selecting a third UI element set based on intents derived from utterances produced during a conversation, where operations to select and present the first and third UI sets occur during the conversation.

Some embodiments may provide a set of identifiers of the second set of UI elements to a user-facing application to cause the user-facing application to present the second set of UI elements, as indicated by block 524. When providing an identifier of a set of UI elements to an application, some embodiments may provide the identifier without providing other program code for the set of UI elements. Alternatively, some embodiments may provide program code defining or otherwise characterizing the set of UI elements based on the program code.

After receiving the identifier of the set of UI elements, an application may present the set of UI elements to a user. Presenting the set of UI elements may include presenting the set of UI elements in a main viewing element of the UI, a sidebar element of the UI, or another portion of the UI. For example, some embodiments may receive an identifier of a set of UI elements and, in response, retrieve locally stored program code mapped to the identifier and render the set of UI elements on a UI screen based on the locally stored program code. Alternatively, some embodiments may receive program code for a set of UI elements with the identifier of the set of UI elements and, in response, render the received program code to present the set of UI elements.

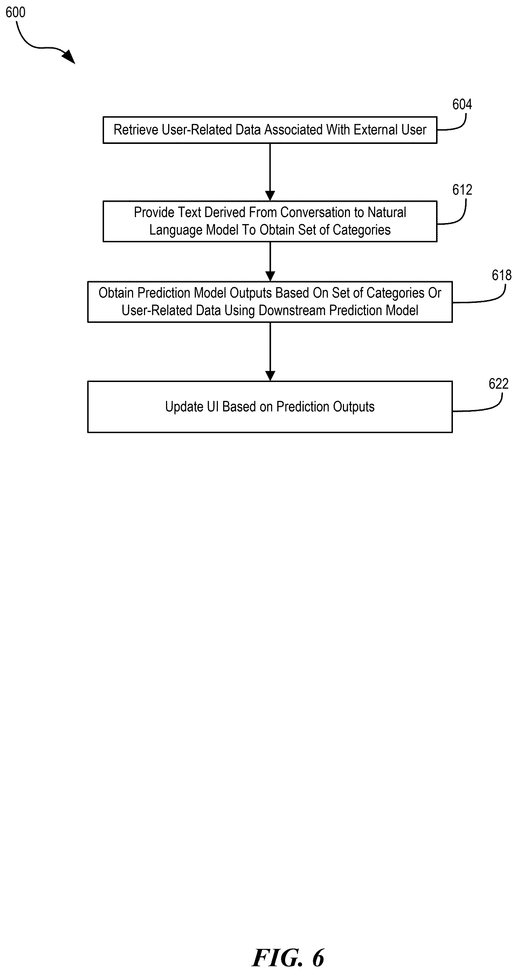

FIG. 6 shows a flowchart of a process for waiting until agent activity triggers operations to determine intents used to select a set of UI elements, in accordance with one or more embodiments. Some embodiments may retrieve user-related data associated with an external user, as indicated by block 604. The user-related data may include clickstream activity data, such as click events, page views, the identifiers of UI elements that a user interacts with, and time spent on a page. The user-related data may also include message activity data, such as messages sent by or to a user. The user-related data may also include time stamps or time intervals indicating the time that an event or activity occurred. Some embodiments may retrieve the time stream data. Furthermore, when retrieving user-related data, some embodiments may perform operations similar to or the same as those described for block 518. For example, some embodiments may query an account database to retrieve a set of messages and timestamps for the set of messages.

Some embodiments may provide text derived from the conversation to a natural language model to obtain a set of categories, as indicated by block 612. Some embodiments may use operations similar to or the same as those described for block 504 or block 512 to obtain a set of categories (e.g., a set of categories representing user intent). For example, some embodiments may transcribe utterances from a conversation between a first and second person while the conversation is ongoing and provide the text to a natural language model to categorize the text.

In some embodiments, operations to send text to the natural language model may be event-driven. For example, the successful completion of a transcription operation on an utterance causes an application executing on a container to send, to an API of a natural language model, the text from the container. Alternatively, operations to send text to the natural language model may be triggered by the satisfaction of a set of criteria or an interaction with a button of a UI screen.

Some embodiments may obtain a set of decision system outputs based on the set of categories or the user-related data using a downstream prediction model or another type of downstream decision model, as indicated by block 618. Based on a natural language model output category, one or more downstream operations may take place, such as the modification of an account value of a user account, the deactivation of an account, the selection of a new agent user and a corresponding spinning-up of a new container to execute a new user-facing application, etc. Furthermore, confidence values associated with the set of categories may also be used to determine what actions to take. For example, if a set of confidence values associated with a set of model-predicted categories are too low, some embodiments may forego modifying a database or updating a UI based on the predicted categories. Alternatively, or additionally, some embodiments may forego sending a set of predicted categories to a downstream decision system (e.g., a downstream prediction model) based on a determination that the set of confidence values does not satisfy a confidence threshold.

In some embodiments, a downstream decision system may include a rules engine, where the rules engine may determine whether a user participating in the conversation has an appropriate security level associated with recommended UI elements. Alternatively, or additionally, a downstream decision system may include a rules-based system to select a future agent user to engage in a conversation with an external user. For example, some embodiments may extract an intent category "verify configuration" from a first user's utterance and, in response, route a call with the first user to an agent user mapped to the intent category.

Some embodiments may update the UI based on the set of prediction model outputs, as indicated by block 622. Some embodiments may perform operations similar to or the same as those described for block 524. For example, some embodiments may provide program code for a set of UI elements to a user-facing application that causes the user-facing application to display the set of UI elements.

The above-described embodiments of the present disclosure are presented for purposes of illustration and not limitation, and the present disclosure is limited only by the claims that follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real-time. It should also be noted that the systems and/or methods described above may be applied to, or used in accordance with, other systems and/or methods.

It should be noted that the features and limitations described in any one embodiment may be applied to any other embodiment herein, and a flowchart or examples relating to one embodiment may be combined with any other embodiment in a suitable manner, done in different orders, or done in parallel. Furthermore, not all operations of a flowchart need to be performed. In addition, the systems and methods described herein may be performed in real-time. It should also be noted that the systems and/or methods described above may be applied to, or used in accordance with, other systems and/or methods.

As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety (i.e., the entire portion), of a given item (e.g., data) unless the context clearly dictates otherwise. Furthermore, a "set" may refer to a singular form or a plural form, such that a "set of items" may refer to one item or a plurality of items.

In some embodiments, the operations described in this disclosure may be implemented in a set of processing devices (e.g., a digital processor, an analog processor, a digital circuit designed to process information, an analog circuit designed to process information, a state machine, and/or other mechanisms for electronically processing information). The processing devices may include one or more devices executing some or all of the operations of the methods in response to instructions stored electronically on one or more non-transitory, machine-readable media (e.g., a set of machine-readable storage media), such as an electronic storage medium. Furthermore, the use of the term "media" may include a single medium or a combination of multiple media, such as a first medium and a second medium. A set of non-transitory, machine-readable media storing instructions may include instructions included on a single medium or instructions distributed across multiple media. The processing devices may include one or more devices configured through hardware, firmware, and/or software to be specifically designed for the execution of one or more of the operations of the methods.

In some embodiments, the various computer systems and subsystems illustrated in FIG. 1 or FIG. 2 may include one or more computing devices that are programmed to perform the functions described herein. The computing devices may include one or more electronic storages (e.g., a set of databases accessible to one or more applications depicted in the system 100), one or more physical processors programmed with one or more computer program instructions, and/or other components. For example, the set of databases may include a relational database such as a PostgreSQL^{™} database or MySQL database. Alternatively, or additionally, the set of databases or other electronic storage used in this disclosure may include a non-relational database, such as a Cassandra^{™} database, MongoDB^{™} database, Redis database, Neo4j^{™} database, Amazon Neptune^{™} database, etc.

The computing devices may include communication lines or ports to enable the exchange of information with a set of networks (e.g., a network used by the system 100) or other computing platforms via wired or wireless techniques. The network may include the internet, a mobile phone network, a mobile voice or data network (e.g., a 5G or Long-Term Evolution (LTE) network), a cable network, a public switched telephone network, or other types of communications networks or combinations of communications networks. A network described by devices or systems described in this disclosure may include one or more communications paths, such as Ethernet, a satellite path, a fiber-optic path, a cable path, a path that supports internet communications (e.g., IPTV), free-space connections (e.g., for broadcast or other wireless signals), Wi-Fi, Bluetooth, near-field communication, or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Each of these devices described in this disclosure may also include electronic storage. The electronic storage may include non-transitory storage media that electronically store information. The storage media of the electronic storage may include one or both of (i) system storage that is provided integrally (e.g., substantially non-removable) with servers or client computing devices, or (ii) removable storage that is removably connectable to the servers or client computing devices via, for example, a port (e.g., a USB port, a firewire port, etc.) or a drive (e.g., a disk drive, etc.). The electronic storage may include one or more optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storage may include one or more virtual storage resources (e.g., cloud storage, a virtual private network, and/or other virtual storage resources). Electronic storage may store software algorithms, information determined by the processors, information obtained from servers, information obtained from client computing devices, or other information that enables the functionality as described herein.

The processors may be programmed to provide information processing capabilities on the computing devices. As such, the processors may include one or more of a digital processor, an analog processor, a digital circuit designed to process information, an analog circuit designed to process information, a state machine, and/or other mechanisms for electronically processing information. In some embodiments, the processors may include a plurality of processing units. These processing units may be physically located within the same device, or the processors may represent the processing functionality of a plurality of devices operating in coordination. The processors may be programmed to execute computer program instructions to perform functions described herein of subsystems described in this disclosure or other subsystems. The processors may be programmed to execute computer program instructions by software, hardware, firmware, some combination of software, hardware, or firmware, and/or other mechanisms for configuring processing capabilities on the processors.

It should be appreciated that the description of the functionality provided by the different subsystems described herein is for illustrative purposes and is not intended to be limiting, as any of the subsystems described in this disclosure may provide more or less functionality than is described. For example, one or more of the subsystems described in this disclosure may be eliminated, and some or all of their functionality may be provided by other ones of the subsystems described in this disclosure. As another example, additional subsystems may be programmed to perform some or all of the functionality attributed herein to one of the subsystems described in this disclosure.

With respect to the components of computing devices described in this disclosure, each of these devices may receive content and data via input/output (I/O) paths. Each of these devices may also include processors and/or control circuitry to send and receive commands, requests, and other suitable data using the I/O paths. The control circuitry may comprise any suitable processing, storage, and/or I/O circuitry. Further, some or all of the computing devices described in this disclosure may include a user input interface and/or user output interface (e.g., a display) for use in receiving and displaying data. In some embodiments, a display, such as a touchscreen, may also act as a user input interface. It should be noted that in some embodiments, one or more devices described in this disclosure may have neither a user input interface nor displays and may instead receive and display content using another device (e.g., a dedicated display device such as a computer screen and/or a dedicated input device such as a remote control, mouse, voice input, etc.). Additionally, one or more of the devices described in this disclosure may run an application (or another suitable program) that performs one or more of the operations described in this disclosure.

Although the present invention has been described in detail for the purpose of illustration based on what is currently considered to be the most practical and preferred embodiments, it is to be understood that such detail is solely for that purpose and that the invention is not limited to the disclosed embodiments but, on the contrary, is intended to cover modifications and equivalent arrangements that are within the scope of the appended claims. For example, it is to be understood that the present invention contemplates that, to the extent possible, one or more features of any embodiment may be combined with one or more features of any other embodiment.

As used throughout this application, the word "may" is used in a permissive sense (i.e., meaning having the potential to) rather than the mandatory sense (i.e., meaning must). The words "include," "including," "includes," and the like mean including, but not limited to. As used throughout this application, the singular forms "a," "an," and "the" include plural referents unless the context clearly indicates otherwise. Thus, for example, reference to "an element" or "the element" includes a combination of two or more elements, notwithstanding the use of other terms and phrases for one or more elements, such as "one or more." The term "or" is non-exclusive (i.e., encompassing both "and" and "or"), unless the context clearly indicates otherwise. Terms describing conditional relationships (e.g., "in response to X, Y," "upon X, Y," "if X, Y," "when X, Y," and the like) encompass causal relationships in which the antecedent is a necessary causal condition, the antecedent is a sufficient causal condition, or the antecedent is a contributory causal condition of the consequent (e.g., "state X occurs upon condition Y obtaining" is generic to "X occurs solely upon Y" and "X occurs upon Y and Z"). Such conditional relationships are not limited to consequences that instantly follow the antecedent obtaining, as some consequences may be delayed, and in conditional statements, antecedents are connected to their consequents (e.g., the antecedent is relevant to the likelihood of the consequent occurring). Statements in which a plurality of attributes or functions are mapped to a plurality of objects (e.g., a set of processors performing steps/operations A, B, C, and D) encompass all such attributes or functions being mapped to all such objects and subsets of the attributes or functions being mapped to subsets of the attributes or functions (e.g., both/all processors each performing steps/operations A-D, and a case in which processor 1 performs step/operation A, processor 2 performs step/operation B and part of step/operation C, and processor 3 performs part of step/operation C and step/operation D), unless otherwise indicated. Further, unless otherwise indicated, statements that one value or action is "based on" another condition or value encompass both instances in which the condition or value is the sole factor and instances in which the condition or value is one factor among a plurality of factors.

Unless the context clearly indicates otherwise, statements that "each" instance of some collection has some property should not be read to exclude cases where some otherwise identical or similar members of a larger collection do not have the property (i.e., each does not necessarily mean each and every). Limitations as to the sequence of recited steps should not be read into the claims unless explicitly specified (e.g., with explicit language like "after performing X, performing Y"), in contrast to statements that might be improperly argued to imply sequence limitations (e.g., "performing X on items, performing Y on the X'ed items") used for purposes of making claims more readable rather than specifying a sequence. Statements referring to "at least Z of A, B, and C" and the like (e.g., "at least Z of A, B, or C") refer to at least Z of the listed categories (A, B, and C) and do not require at least Z units in each category. Unless the context clearly indicates otherwise, it is appreciated that throughout this specification discussions utilizing terms such as "processing," "computing," "calculating," "determining," or the like refer to actions or processes of a specific apparatus, such as a special purpose computer or a similar special purpose electronic processing/computing device. Furthermore, unless indicated otherwise, updating an item may include generating the item or modifying an existing item. Thus, updating a record may include generating a record or modifying the value of an already-generated value in a record. Additionally, as used in the specification, "a portion" refers to a part of, or the entirety of (i.e., the entire portion), a given item (e.g., data) unless the context clearly dictates otherwise.

Unless the context clearly indicates otherwise, ordinal numbers used to denote an item do not define the item's position. For example, an item may be the first item of a set of items even if the item is not the first item to have been added to the set of items or is otherwise indicated to be listed as the first item of an ordering of the set of items. Thus, for example, if a set of items is sorted in a sequence from "item 1," "item 2," and "item 3," for first item in the set may be "item 2" unless otherwise stated.

### Enumerated Embodiments

The present techniques will be better understood with reference to the following enumerated embodiments:
1. A method comprising: transcribing an utterance into a text portion during a conversation associated with a first person; providing the text portion to a natural language model to predict a set of intents; and presenting at least one element of the second set of UI elements on the UI screen based on the set of intents during the conversation.
2. A method comprising: transcribing an utterance produced into a text portion during a conversation associated with a first person, wherein the utterance is produced while a UI presents a first set of UI elements on a UI screen, wherein a set of data entry fields is associated with the first set of UI elements; determining a result indicating that an interval indicating a rate at which a set of data entry fields of the first set of UI elements is being populated satisfies a data entry interval threshold; providing the text portion to a natural language model to predict a set of most likely intents based on the result; determining a set of identifiers for a second set of UI elements of the UI based on the set of most likely intents and an activity history associated with an account for the first person; and presenting at least one element of the second set of UI elements on the UI screen based on the set of identifiers.
3. A method comprising: presenting, during a conversation between a first person and a second person, a first set of UI elements to the second person, wherein a set of data entry fields is mapped to the first set of UI elements; transcribing an utterance to generate a natural language text portion, wherein the utterance is produced by the first person during the conversation; determining whether an interval indicating when a field of the set of data entry fields was last updated satisfies a data entry interval threshold, wherein the interval is measured from a timestamp indicating when a field of the set of data entry fields was last updated; in response to a determination that the interval exceeds the data entry interval threshold, providing the natural language text portion to an application program interface (API) of a natural language model to predict a set of most likely intents based on the natural language text portion; determining a set of identifiers for a second set of UI elements of the UI based on the set of most likely intents and an activity history associated with an account for the first person; and presenting at least one element of the second set of UI elements based on the set of identifiers during the conversation.
4. A method comprising: transcribing an utterance produced by a first person into a text portion during a conversation between the first person and a second person, wherein the utterance is produced while a UI screen presents a first set of UI elements, and wherein a set of data entry fields is mapped to the first set of UI elements; determining a result indicating that an interval satisfies a data entry interval threshold, wherein the interval indicates when a field of the set of data entry fields was last updated; providing the text portion to a natural language model to predict a set of most likely intents based on the result; determining a set of identifiers for a second set of UI elements of the UI based on the set of most likely intents and an activity history associated with an account for the first person; and presenting at least one element of the second set of UI elements based on the set of identifiers during the conversation.
5. The method of any of the embodiments above, wherein: transcribing the utterance comprises transcribing the utterance with a first application executing in a first container; providing the text portion to the natural language model comprises sending the text portion from the first container to a second container, wherein an application hosting the natural language model is executing in the second container; determining the second set of UI elements comprises sending, from the second container to a third container, the set of most likely intents to a downstream prediction model hosted in the third container; and presenting the second set of UI elements comprises sending, from the third container to the first container, identifiers associated with the second set of UI elements.
6. The method of any of the embodiments above, wherein: selecting the second set of UI elements comprise determining, based on the set of most likely intents, a sequence of UI element sets comprising an initial UI element set and a following UI element set; the initial UI element set comprises the second set of UI elements; the following UI element set comprises UI elements different from the second set of UI elements; and the method further comprising: obtaining a request based on an interaction with a UI element of the initial UI element set; and presenting the following UI element set on the UI screen based on the request.
7. The method of any of the embodiments above, wherein: the result is a first result; the utterance is a first utterance; the text portion is a first text portion; the set of most likely intents is a first set of most likely intents; the method further comprises: transcribing an earlier utterance produced by the first person into an earlier text portion; providing the earlier text portion to the natural language model to determine an earlier set of most likely intents and a set of confidence values associated with the earlier set of most likely intents based on the earlier utterance; and determining a second result indicating that the set of confidence values does not satisfy a threshold; and selecting an earlier set of UI elements based on an earlier activity history without the earlier set of most likely intents.
8. The method of any of the embodiments above, further comprising: detecting a value corresponding with a first data entry field of the set of data entry fields in the text portion; and populating the first data entry field with the value.
9. The method of any of the embodiments above, wherein the activity history comprises a set of timestamps associated with a set of activities indicated by the activity history, the method further comprising: determining a set of time differences indicating differences between the set of timestamps and a current time; determining a set of input weights associated with the set of activities based on the set of time differences, wherein the set of input weights is negatively correlated with the set of time diff¬¬erences, wherein selecting the second set of UI elements comprises selecting the second set of UI elements based on the set of input weights.
10. The method of any of the embodiments above, wherein the activity history comprises a set of timestamps associated with a set of activities indicated by the activity history, the method further comprising determining a subset of activities by selecting activities associated with timestamps of the set of timestamps that are later than a time threshold, wherein selecting the second set of UI elements comprises selecting the second set of UI elements based on the subset of activities.
11. The method of any of the embodiments above, wherein the first set of UI elements further comprising selecting the first set of UI elements based on the activity history.
12. The method of any of the embodiments above, wherein the conversation is a first conversation, and wherein the text portion is a previous text portion, and wherein the set of most likely intents is a first set of most likely intents, the method further comprising: transcribing, during a previous conversation between the first person and a third person, a previous utterance produced by the first person into a previous text portion; providing the previous text portion to the natural language model to determine a previous set of most likely intents based on the previous utterance; and selecting the first set of UI elements based on the previous set of most likely intents.
13. The method of any of the embodiments above, wherein the data entry interval threshold is less than or equal to 30 seconds.
14. The method of any of the embodiments above, wherein: the utterance is a first utterance; the text portion is a first text portion; the interval is a first interval; and the method further comprises: transcribing a second utterance into a second text portion into a second text portion; determining a result indicating that a second interval indicating a second rate at which a second set of data entry fields of the second set of UI elements is being populated does not satisfy the data entry interval threshold; and not providing the text portion to the natural language model based on the result.
15. The method of any of the embodiments above, further comprising: determining a timestamp associated with the text portion, wherein the timestamp indicates at least one of a starting time of the utterance, an ending time of the utterance, or a time between the starting time of the utterance and the ending time of the utterance; storing the set of most likely intents in a cache in association with the timestamp; determining a result indicating that the timestamp exceeds a cache duration threshold of the cache; and deleting, from the cache, the set of most likely intents based on the result.
16. The method of any of the embodiments above, further comprising storing the text portion in a low-latency database having a response time less than 100 milliseconds, wherein sending the text portion to the natural language model comprises retrieving the text portion from the low-latency database.
17. The method of any of the embodiments above, wherein the text portion is a first text portion, transcribing the utterance comprises transcribing a plurality of utterances into a plurality of text portions, and wherein providing the text portion comprises providing the plurality of text portions.
18. The method of any of the embodiments above, further comprising: detecting a value corresponding with a first data entry field of the set of data entry fields in the text portion; and populating the first data entry field with the value.
19. The method of any of the embodiments above, wherein: the utterance is a first utterance; the text portion is a first text portion; the set of most likely intents is a first set of most likely intents; the method further comprise: transcribing a second utterance produced by the first person into a second text portion; providing the second text portion to the natural language model to determine a second set of most likely intents and a set of confidence values based on the second text portion; and determining a result indicating that the set of confidence values does not satisfy a threshold; and selecting a third set of UI elements based on a second activity history and the result.
20. The method of any of the embodiments above, wherein determining the set of identifiers further comprises: determining a first security score associated with the first person based on a first account associated with the first person; determining a second security score associated with the first person based on a second account associated with the first person; and comparing the first security score and the second security score to a security score threshold.
21. The method of any of the embodiments above, the method further comprising: determining a first confidence value associated with a first set of candidate intents; determining a second confidence value associated with a second set of candidate intents; and comparing the first confidence value and the second confidence value to a confidence threshold to select at least one intent of the first set of candidate intents and the second set of candidate intents for inclusion in the set of most likely intents.
22. A tangible, non-transitory, machine-readable medium storing instructions that, when executed by a data processing apparatus, cause the data processing apparatus to perform operations comprising those of any of embodiments 1-21.
23. A system comprising one or more processors; and memory storing instructions that, when executed by the processors, cause the processors to effectuate operations comprising those of any of embodiments 1-21.
24. A system comprising means for performing any of embodiments 1-21.

## Claims

1. A system for decreasing computing resource costs when performing real-time updates to a user interface (UI) based on intervals between data entry field interactions, the system comprising one or more operations:
presenting, during a conversation between a first person and a second person, a first set of UI elements to the second person, wherein a set of data entry fields is mapped to the first set of UI elements;
transcribing an utterance to generate a natural language text portion, wherein the utterance is produced by the first person during the conversation;
determining whether an interval indicating a rate at which the set of data entry fields is being populated satisfies a data entry interval threshold, wherein the interval is measured from a timestamp indicating when a field of the set of data entry fields was last updated;
in response to a determination that the interval exceeds the data entry interval threshold, providing the natural language text portion to an application program interface (API) of a natural language model to predict a set of most likely intents based on the natural language text portion;
determining a set of identifiers for a second set of UI elements of the UI based on the set of most likely intents and an activity history associated with an account for the first person; and
presenting at least one element of the second set of UI elements based on the set of identifiers during the conversation.

2. A method for performing real-time updates to a user interface (UI) based on utterances, the method comprising:
transcribing an utterance produced by a first person into a text portion during a conversation between the first person and a second person, wherein the utterance is produced while a UI screen presents a first set of UI elements, and wherein a set of data entry fields is mapped to the first set of UI elements;
determining a result indicating that an interval satisfies a data entry interval threshold, wherein the interval indicates when a field of the set of data entry fields was last updated;
providing the text portion to a natural language model to predict a set of most likely intents based on the result;
determining a set of identifiers for a second set of UI elements of the UI based on the set of most likely intents and an activity history associated with an account for the first person; and
presenting at least one element of the second set of UI elements based on the set of identifiers during the conversation.

3. The method of claim 2, wherein:
transcribing the utterance comprises transcribing the utterance with a first application executing in a first container;
providing the text portion to the natural language model comprises sending the text portion from the first container to a second container, wherein an application hosting the natural language model is executing in the second container;
determining the second set of UI elements comprises sending, from the second container to a third container, the set of most likely intents to a downstream prediction model hosted in the third container; and
presenting the second set of UI elements comprises sending, from the third container to the first container, identifiers associated with the second set of UI elements.

4. The method of claim 2 or 3, wherein:
selecting the second set of UI elements comprise determining, based on the set of most likely intents, a sequence of UI element sets comprising an initial UI element set and a following UI element set;
the initial UI element set comprises the second set of UI elements;
the following UI element set comprises UI elements different from the second set of UI elements; and
the method further comprising:
obtaining a request based on an interaction with a UI element of the initial UI element set; and
presenting the following UI element set on the UI screen based on the request.

5. The method of any one of claims 2 to 4, wherein:
the result is a first result;
the utterance is a first utterance;
the text portion is a first text portion;
the set of most likely intents is a first set of most likely intents;
the method further comprises:
transcribing an earlier utterance produced by the first person into an earlier text portion;
providing the earlier text portion to the natural language model to determine an earlier set of most likely intents and a set of confidence values associated with the earlier set of most likely intents based on the earlier utterance; and
determining a second result indicating that the set of confidence values does not satisfy a threshold; and
selecting an earlier set of UI elements based on an earlier activity history without the earlier set of most likely intents.

6. The method of any one of claims 2 to 5, further comprising:
detecting a value corresponding with a first data entry field of the set of data entry fields in the text portion; and
populating the first data entry field with the value.

7. The method of any one of claims 2 to 6, wherein:
(a) the activity history comprises a set of timestamps associated with a set of activities indicated by the activity history, the method further comprising: determining a set of time differences indicating differences between the set of timestamps and a current time; determining a set of input weights associated with the set of activities based on the set of time differences, wherein the set of input weights is negatively correlated with the set of time differences, wherein selecting the second set of UI elements comprises selecting the second set of UI elements based on the set of input weights; and/or
(b) wherein the activity history comprises a set of timestamps associated with a set of activities indicated by the activity history, the method further comprising determining a subset of activities by selecting activities associated with timestamps of the set of timestamps that are later than a time threshold, wherein selecting the second set of UI elements comprises selecting the second set of UI elements based on the subset of activities.

8. The method of any one of claims 2 to 7, wherein:
(a) the first set of UI elements further comprising selecting the first set of UI elements based on the activity history; and/or
(b) wherein the data entry interval threshold is less than or equal to 30 seconds.

9. The method of any one of claims 2 to 8, wherein the conversation is a first conversation, and wherein the text portion is a previous text portion, and wherein the set of most likely intents is a first set of most likely intents, the method further comprising:
transcribing, during a previous conversation between the first person and a third person, a previous utterance produced by the first person into a previous text portion;
providing the previous text portion to the natural language model to determine a previous set of most likely intents based on the previous utterance; and
selecting the first set of UI elements based on the previous set of most likely intents.

10. One or more non-transitory, machine-readable media comprising program instructions that, when executed by one or more processors, cause the one or more processors to perform operations comprising:
transcribing an utterance produced into a text portion during a conversation associated with a first person, wherein the utterance is produced while a UI presents a first set of UI elements on a UI screen, wherein a set of data entry fields is associated with the first set of UI elements;
determining a result indicating that an interval indicating when a field of the set of data entry fields was last updated satisfies a data entry interval threshold;
providing the text portion to a natural language model to predict a set of most likely intents based on the result;
determining a set of identifiers for a second set of UI elements of the UI based on the set of most likely intents and an activity history associated with an account for the first person; and
presenting at least one element of the second set of UI elements on the UI screen based on the set of identifiers.

11. The one or more non-transitory, machine-readable media of claim 10, wherein:
the utterance is a first utterance;
the text portion is a first text portion;
the interval is a first interval; and
the operations further comprises:
transcribing a second utterance into a second text portion into a second text portion;
determining a result indicating that a second interval indicating a second rate at which a second set of data entry fields of the second set of UI elements is being populated does not satisfy the data entry interval threshold; and
not providing the text portion to the natural language model based on the result.

12. The one or more non-transitory, machine-readable media of claim 10 or 11, further comprising one or more of:
(a) determining a timestamp associated with the text portion, wherein the timestamp indicates at least one of a starting time of the utterance, an ending time of the utterance, or a time between the starting time of the utterance and the ending time of the utterance; storing the set of most likely intents in a cache in association with the timestamp; determining a result indicating that the timestamp exceeds a cache duration threshold of the cache; and deleting, from the cache, the set of most likely intents based on the result; and/or
(b) storing the text portion in a low-latency database having a response time less than 100 milliseconds, wherein sending the text portion to the natural language model comprises retrieving the text portion from the low-latency database; and/or
(c) detecting a value corresponding with a first data entry field of the set of data entry fields in the text portion; and populating the first data entry field with the value.

13. The non-transitory, machine-readable media of any one of claims 10 to 12, wherein the text portion is a first text portion, transcribing the utterance comprises transcribing a plurality of utterances into a plurality of text portions, and wherein providing the text portion comprises providing the plurality of text portions.

14. The non-transitory, machine-readable media of any one of claims 10 to 13, wherein:
the utterance is a first utterance;
the text portion is a first text portion;
the set of most likely intents is a first set of most likely intents;
the operations further comprise:
transcribing a second utterance produced by the first person into a second text portion;
providing the second text portion to the natural language model to determine a second set of most likely intents and a set of confidence values based on the second text portion; and
determining a result indicating that the set of confidence values does not satisfy a threshold; and
selecting a third set of UI elements based on a second activity history and the result.

15. The non-transitory, machine-readable media of any one of claims 10 to 14, wherein:
(a) determining the set of identifiers further comprises: determining a first security score associated with the first person based on a first account associated with the first person; determining a second security score associated with the first person based on a second account associated with the first person; and comparing the first security score and the second security score to a security score threshold; and/or
(b) the operations further comprise: determining a first confidence value associated with a first set of candidate intents; determining a second confidence value associated with a second set of candidate intents; and comparing the first confidence value and the second confidence value to a confidence threshold to select at least one intent of the first set of candidate intents and the second set of candidate intents for inclusion in the set of most likely intents.
